# DEMANDE DE BREVET EUROPEEN

(11) **EP 3 923 087 A1**
(43) Date de publication de la demande: **15.12.2021**
(21) Numéro de dépôt: 20179344.5
(22) Date de dépôt: 10.06.2020
(51) Int. Cl.: G04B 37/10, G04B 37/08

(54) **DISPOSITIF D'ETANCHEITE**

(71) Demandeur: Meco S.A., 2540 Grenchen (CH)
(72) Inventeur: GEISER, M. Samuel, 2502 Bienne (CH); THIRY, Rémy, 25120 Maîche (FR); AVRIL, M. Hervé, 2345 Les Breuleux (CH); BONENFANT, Julien, 2540 Grenchen (CH)
(74) Mandataire: ICB SA

(57) **Abrégé**

La présente concerne un dispositif d'étanchéité (100) pour montre (200) configuré pour être inséré dans un espace primaire (201) compris dans une carrure (210). Ledit dispositif d'étanchéité (100) comprenant au moins un organe d'insertion (110) configuré pour être inséré dans ledit espace primaire (201), au moins un premier ensemble d'éléments d'étanchéité (120) configuré pour étanchéifier ledit espace primaire (201) entre ladite carrure (210) et ledit au moins un organe d'insertion (110), et au moins un deuxième ensemble d'éléments d'étanchéité (140) configuré pour étanchéifier un espace secondaire (131) entre au moins un organe d'entraînement (130) et ledit au moins un organe d'insertion (110).

## Description

### Domaine technique

La présente invention concerne un dispositif d'étanchéité pour montre permettant d'étanchéifier pour de fortes pressions.

### Arrière-plan technologique

Les couronnes de montres actuelles sont conçues pour une certaine profondeur. Au-delà de cette profondeur, il est difficile de garantir l'étanchéité de la montre en raison des fortes pressions qui s'exercent sur les différentes parties de la montre et en particulier sur la couronne.

Par ailleurs, les systèmes d'étanchéité sur le marché ne satisfont pas les amateurs de plongé ou les plongeurs professionnels car, comme mentionné ci-avant, l'étanchéité n'est pas garantie d'une part, ou lorsque l'étanchéité est assurée c'est au détriment de la maniabilité de la couronne qui ne se laisse pas facilement actionner.

### Résumé de l'invention

La présente invention concerne un dispositif d'étanchéité pour montre, de préférence de montre ; ledit dispositif d'étanchéité étant configuré pour être inséré dans un espace primaire compris dans une carrure ; ledit dispositif d'étanchéité comprenant au moins un :
- Organe d'insertion ; ledit au moins un organe d'insertion étant configuré pour être inséré dans ledit espace primaire ;
- Premier ensemble d'éléments d'étanchéité ; ledit au moins un premier ensemble d'éléments d'étanchéité configuré pour étanchéifier ledit espace primaire entre ladite carrure et ledit au moins un organe d'insertion ;
- Organe d'entraînement ; ledit au moins un organe d'entraînement comprenant un espace secondaire configuré pour recevoir ledit au moins un organe d'insertion ;
- Deuxième ensemble d'éléments d'étanchéité ; ledit au moins un deuxième ensemble d'éléments d'étanchéité étant configuré pour étanchéifier ledit espace secondaire entre ledit au moins un organe d'entraînement et ledit au moins un organe d'insertion.

Grâce à cette disposition, le dispositif d'étanchéité permet d'étanchéifier la montre, plus particulièrement ledit espace primaire entre ladite carrure et ledit au moins un organe d'insertion, et ledit espace secondaire entre ledit au moins un organe d'entraînement et ledit au moins un organe d'insertion, pour de fortes pressions comme, par exemple, inférieures à 1500 bars.

Selon un mode de réalisation, ledit au moins un premier ensemble d'éléments d'étanchéité comprend au moins un premier élément d'étanchéité et/ou au moins un premier organe d'obstruction.

Selon un mode de réalisation, ledit au moins un premier organe d'obstruction est plus dur que ledit au moins un premier élément d'étanchéité.

Selon un mode de réalisation, ledit au moins un premier élément d'étanchéité est un premier joint d'étanchéité.

Selon un mode de réalisation, ledit au moins un premier organe d'obstruction est configuré pour limiter tout ou en partie le déplacement dudit au moins un premier élément d'étanchéité dans ledit espace primaire, de préférence pour obstruer ledit déplacement dudit au moins un premier élément d'étanchéité dans ledit espace primaire.

Selon un mode de réalisation, ledit espace primaire comprend un premier volume primaire, dans lequel se trouvent ledit au moins un premier organe d'obstruction et ledit au moins un premier élément d'étanchéité, et un deuxième volume primaire ; ledit au moins un premier organe d'obstruction est configuré pour limiter, de préférence pour obstruer, tout ou en partie le déplacement dudit au moins un premier élément d'étanchéité dudit premier volume primaire vers ledit deuxième volume primaire.

Grâce à l'une ou l'autre de ces dispositions précédentes, ledit espace primaire devient étanche pour de fortes pressions comme, par exemple, inférieures à 1500 bars.

Selon un mode de réalisation, ledit au moins un organe d'entraînement comprend une cavité configuré pour loger ledit au moins un deuxième ensemble d'éléments d'étanchéité.

Selon un mode de réalisation, ladite cavité est une rainure à l'intérieure dudit au moins un organe d'entraînement

Grâce à l'une ou l'autre de ces dispositions précédentes, ledit au moins un deuxième ensemble d'éléments d'étanchéité est logé dans ledit espace secondaire dans ledit au moins un organe d'entraînement sans gêner les mouvements dudit au moins un organe d'insertion.

Selon un mode de réalisation, ledit au moins un deuxième ensemble d'éléments d'étanchéité comprend au moins un deuxième élément d'étanchéité et/ou au moins un deuxième organe d'obstruction.

Selon un mode de réalisation, ledit au moins un deuxième organe d'obstruction est plus dur que ledit au moins un deuxième élément d'étanchéité.

Selon un mode de réalisation, ledit au moins un deuxième élément d'étanchéité est un deuxième joint d'étanchéité.

Selon un mode de réalisation, ledit au moins un deuxième organe d'obstruction est configuré pour limiter tout ou en partie le déplacement dudit au moins un deuxième élément d'étanchéité dans ledit espace secondaire, de préférence pour obstruer ledit déplacement dudit au moins un deuxième élément d'étanchéité dans ledit espace secondaire.

Selon un mode de réalisation, ledit espace secondaire comprend un premier volume secondaire, dans lequel se trouvent ledit au moins un deuxième organe d'obstruction et ledit au moins un deuxième élément d'étanchéité, et un deuxième volume secondaire ; ledit au moins un deuxième organe d'obstruction est configuré pour limiter, de préférence pour obstruer, tout ou en partie le déplacement dudit au moins un deuxième élément d'étanchéité dudit premier volume secondaire vers ledit deuxième volume secondaire.

Selon un mode de réalisation, ladite cavité, de préférence ladite rainure, se trouve dans ledit premier volume secondaire dudit au moins un organe d'entraînement.

Grâce à l'une ou l'autre de ces dispositions précédentes, ledit espace secondaire devient étanche pour de fortes pressions comme, par exemple, inférieures à 1500 bars.

Selon un mode de réalisation, ledit au moins un premier élément d'étanchéité et ledit au moins un deuxième élément sont plus proches l'un de l'autre que ledit au moins un premier organe d'obstruction et ledit au moins un deuxième organe d'obstruction.

Grâce à cette disposition, ledit au moins un premier et deuxième élément d'étanchéité sont les premiers sur le chemin d'infiltration de l'eau.

Selon un mode de réalisation, ledit au moins un organe d'entraînement étant configuré pour être maintenu dans au moins une première position, pour entraîner dans ladite au moins une deuxième position et pour se déplacer ou être déplacé entre au moins une première position et au moins une deuxième position.

Grâce à cette disposition, ledit au moins un organe d'entraînement peut être maintenu.

Selon un mode de réalisation, ledit dispositif d'étanchéité comprend au moins un organe de maintien configuré pour maintenir ledit au moins un organe d'entraînement dans ladite au moins une première position.

Selon un mode de réalisation, ledit au moins un organe de maintien comprend au moins un élément de maintien disposé sur ledit au moins un organe d'insertion et au moins une partie de maintien disposée sur ledit au moins un organe d'entraînement ; ledit au moins un élément de maintien étant configuré pour coopérer de manière amovible avec ladite au moins une partie de maintien.

Selon un mode de réalisation, ledit au moins un organe d'insertion est configuré pour déplacer ledit au moins un organe d'entraînement lorsque ledit au moins un élément de maintien coopère avec ladite au moins une partie de maintien.

Selon un mode de réalisation, ledit au moins un élément de maintien est un taraudage ou un filetage disposé sur la périphérie interne dudit au moins un organe d'insertion et ladite au moins une partie de maintien est un filetage ou un taraudage disposé sur la périphérie externe dudit au moins un organe d'entraînement.

Selon un mode de réalisation, ledit au moins un organe d'insertion présente une forme cylindrique creuse, de préférence est un tube, et ledit au moins un organe d'entraînement comprend, de préférence à l'intérieure dudit espace secondaire, au moins un membre coulissant configuré pour coulisser dans ladite forme cylindrique creuse, de préférence dans ledit tube.

Selon un mode de réalisation, ledit au moins un élément de maintien est en regard de ladite au moins une partie de maintien, de préférence, ledit au moins un élément de maintien est disposé sur une périphérie interne dudit au moins un organe d'insertion et ladite au moins une partie de maintien est disposée sur une périphérie externe dudit au moins un organe d'entraînement.

Selon un mode de réalisation, ledit au moins un élément de maintien est en regard de ladite au moins une partie de maintien, de préférence, ledit au moins un élément de maintien est disposé sur une périphérie interne de ladite forme cylindrique creuse, de préférence dudit tube, et ladite au moins une partie de maintien est disposée sur une périphérie externe dudit au moins un membre coulissant.

Grâce à l'une ou l'autre de ces dispositions précédentes, ledit au moins un organe d'entraînement peut être maintenu dans ladite au moins une première position, et se déplacer ou être déplacé entre ladite au moins une première position et ladite au moins une deuxième position.

Selon un mode de réalisation, ledit au moins un organe d'insertion comprend une surface d'appui configurée pour amener ledit au moins un deuxième élément d'étanchéité au contact dudit au moins un deuxième organe d'obstruction lorsque ledit au moins un organe d'entraînement est maintenu dans ladite au moins une première position.

Grâce à cette disposition, ledit au moins un deuxième élément d'étanchéité peut être amené au contact dudit au moins un deuxième organe d'obstruction lorsque ledit au moins un organe d'entraînement est maintenu dans ladite au moins une première position.

Selon un mode de réalisation, ledit dispositif d'étanchéité comprend un organe de rappel configuré pour étanchéifier ledit espace secondaire entre ledit au moins un organe d'entraînement et ledit au moins un organe d'insertion et/ou pour compenser un jeu dudit au moins un organe de maintien.

Grâce à cette disposition, ledit organe de rappel peut compenser ledit jeu induit par les tolérances de construction dudit au moins un organe de maintien et ainsi étanchéifier ledit espace secondaire entre ledit au moins un organe d'entraînement et ledit au moins un organe d'insertion.

Selon un mode de réalisation, ledit au moins un organe d'insertion comprend un organe de butée configuré pour être en butée contre la carrure et/ou contre ledit au moins un organe d'entraînement.

Grâce à cette disposition, ledit organe de butée permet de limiter l'insertion dudit au moins un organe d'insertion dans ledit espace primaire et/ou le déplacement ledit au moins un organe d'entraînement lorsque ledit au moins un organe d'entraînement est dans ladite deuxième position.

Selon un mode de réalisation, ledit au moins un organe d'insertion comprend un organe de support configuré pour supporter ledit au moins un premier ensemble d'éléments d'étanchéité.

Grâce à cette disposition, ledit organe de support permet de limiter le déplacement dudit au moins un premier ensemble d'éléments d'étanchéité lors de fortes pressions comme, par exemple, inférieures à 1500 bars.

Selon un mode de réalisation, ledit au moins un premier ensemble d'éléments d'étanchéité est compris entre ledit organe de support et ledit organe de butée.

Grâce à cette disposition, ledit organe de support permet de limiter le déplacement dudit au moins un premier ensemble d'éléments d'étanchéité lors de fortes pressions comme, par exemple, inférieures à 1500 bars.

La présente invention concerne une montre configurée pour être étanche comprenant un dispositif d'étanchéité selon la présente invention.

Grâce à cette disposition, la montre est étanche grâce audit dispositif d'étanchéité, qui permet d'étanchéifier ledit espace primaire entre ladite carrure et ledit au moins un organe d'insertion, et ledit espace secondaire entre ledit au moins un organe d'entraînement et ledit au moins un organe d'insertion, pour de fortes pressions comme, par exemple, inférieures à 1500 bars.

### Brève description des figures

L'invention sera décrite ci-après de manière plus détaillée à l'aide des dessins annexés, donnés à titre d'exemples nullement limitatifs, dans lesquels :

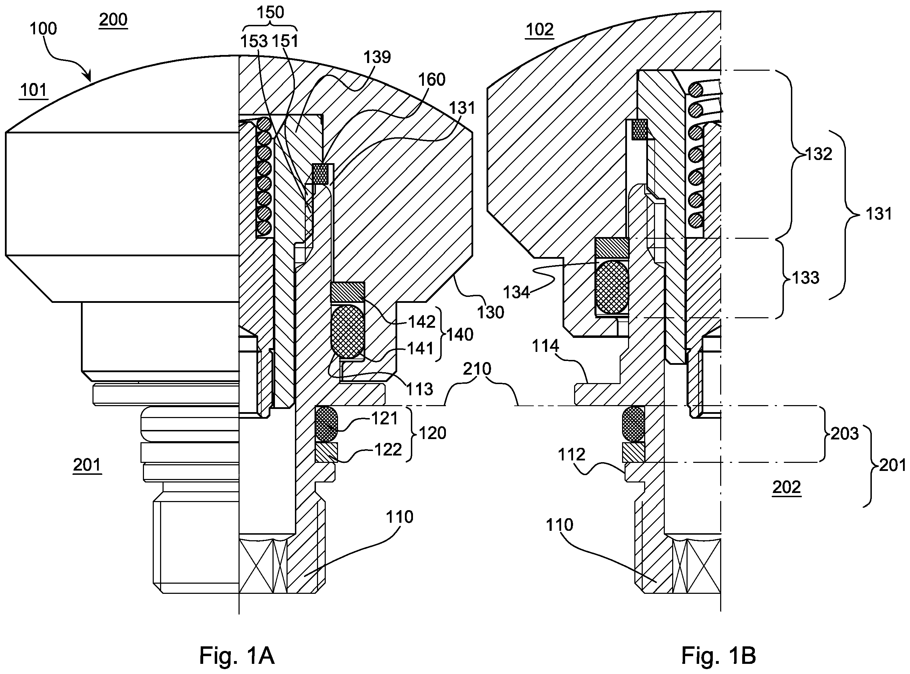

- La figure 1A illustre un dispositif d'étanchéité **100** pour montre **200** dans au moins une première position **101** ; et,
- La figure 1B illustre un dispositif d'étanchéité **100** pour montre **200** dans au moins une deuxième position **102.**

### Description détaillée de l'invention

Les couronnes de montres actuelles offrent une certaine étanchéité. Toutefois, lorsqu'il s'agit de forte pression comme par exemple au-dessus de 300 bars, cette étanchéité est assurée au détriment de la maniabilité de la couronne qui ne se laisse pas facilement actionner.

Ce n'est pas le cas de la montre **200,** selon l'invention, qui est étanche pour ces fortes pression grâce à un dispositif d'étanchéité **100.** En effet, ledit dispositif d'étanchéité **100** pour montre **200,** de préférence de montre **200** est configuré pour être inséré dans un espace primaire **201** compris dans une carrure **210** de ladite montre **200** et comprend au moins un organe d'insertion **110,** au moins un premier ensemble d'éléments d'étanchéité **120,** ledit au moins un deuxième ensemble d'éléments d'étanchéité **140,** et au moins un organe d'entraînement **130.**

Ce dernier, c'est-à-dire ledit au moins un organe d'entraînement **130** peut être maintenu dans au moins une première position **101,** observable sur la fig. 1A, et peut entraîner dans ladite au moins une deuxième position **102,** visible sur la fig. 1B. Ledit au moins un organe d'entraînement **130** peut se déplacer ou être déplacé entre ladite au moins une première position **101,** visible sur la fig.1A, et ladite au moins une deuxième position **102,** visible sur la fig.1B.

Ce maintien dans ladite au moins une première position **101** est permis via au moins un organe de maintien **150.** Ledit au moins un organe de maintien **150** comprend au moins un élément de maintien **151** disposé sur ledit au moins un organe d'insertion **110** configuré pour coopérer de manière amovible avec au moins une partie de maintien **153** disposée sur ledit au moins un organe d'entraînement **130.** Ledit au moins un organe d'insertion **110** est configuré pour déplacer ledit au moins un organe d'entraînement **130** lorsque ledit au moins un élément de maintien **151** coopère avec ladite au moins une partie de maintien **153.**

Plus précisément, ledit au moins un élément de maintien **151** est un taraudage ou un filetage disposé sur la périphérie interne dudit au moins un organe d'insertion **110** et est en regard de ladite au moins une partie de maintien **153** qui peut prendre la forme d'un filetage ou d'un taraudage disposé sur la périphérie externe dudit au moins un organe d'entraînement **130.**

En effet, ledit au moins un organe d'insertion **110** présente une forme cylindrique creuse, de préférence est un tube, et ledit au moins un organe d'entraînement **130** comprend, de préférence totalement ou partiellement à l'intérieure d'un espace secondaire **131** compris par ledit au moins un organe d'entraînement **130,** au moins un membre coulissant **139** configuré pour coulisser dans ladite forme cylindrique creuse, de préférence dans ledit tube.

Visible sur les figures, ledit au moins un élément de maintien **151** est en regard de ladite au moins une partie de maintien **153,** de préférence, ledit au moins un élément de maintien **151** est disposé sur une périphérie interne de ladite forme cylindrique creuse, de préférence dudit tube, et ladite au moins une partie de maintien **153** est disposée sur une périphérie externe dudit au moins un membre coulissant **139** de sorte que ledit au moins un organe d'entraînement **130** peut être maintenu dans ladite au moins une première position **101,** et se déplacer ou être déplacé entre ladite au moins une première position **101** et ladite au moins une deuxième position **102.**

Comme mentionné ci-avant, ladite carrure **210** de ladite montre **200** comprend ledit espace primaire **201** dans lequel ledit au moins un organe d'insertion **110** est inséré. Un organe de butée **114,** compris par ledit au moins un organe d'insertion **110,** permet d'être en butée contre la carrure **210,** lorsque ledit au moins un organe d'insertion **110** est inséré, et/ou contre ledit au moins un organe d'entraînement **130** et ainsi de limiter l'insertion dudit au moins un organe d'insertion **110** dans ledit espace primaire et/ou le déplacement ledit au moins un organe d'entraînement **130** lorsque ledit au moins un organe d'entraînement **130** est dans ladite première position **101.** Par ailleurs, lorsque ledit au moins un organe d'entraînement **130** est dans ladite première position **101,** le contact réalisé entre ledit au moins un organe d'entraînement **130** et ledit organe de butée **114,** l'étanchéité entre ledit espace secondaire **131** et ledit au moins un organe d'entraînement **130** en est améliorée.

Ledit au moins un organe d'entraînement **130,** quant à lui, comprend un espace secondaire **131** configuré pour recevoir ledit au moins un organe d'insertion **110.** Une cavité **134,** de préférence une rainure **134** à l'intérieure dudit au moins un organe d'entraînement **130,** permet de loger ledit au moins un deuxième ensemble d'éléments d'étanchéité **140** et ainsi d'étanchéifier ledit espace secondaire **131** entre ledit au moins un organe d'entraînement **130** et ledit au moins un organe d'insertion **110.**

Comme visible sur la fig. 1A, ledit au moins un deuxième ensemble d'éléments d'étanchéité **140** comprend au moins un deuxième élément d'étanchéité **141,** de préférence un deuxième joint d'étanchéité **141,** et/ou au moins un deuxième organe d'obstruction **142** : ledit au moins un deuxième organe d'obstruction **142** étant plus dur que ledit au moins un deuxième élément d'étanchéité **141.** Ledit au moins un deuxième organe d'obstruction **142** est configuré pour limiter tout ou en partie le déplacement dudit au moins un deuxième élément d'étanchéité **141** dans ledit espace secondaire **131,** de préférence pour obstruer ledit déplacement dudit au moins un deuxième élément d'étanchéité **141** dans ledit espace secondaire **131.**

Observable sur les figs. 1A et 1B, ledit espace secondaire **131** comprend un premier volume secondaire **133,** comprenant ladite cavité **134,** de préférence ladite rainure **134,** et dans lequel se trouvent ledit au moins un deuxième organe d'obstruction **142** et ledit au moins un deuxième élément d'étanchéité **141,** et un deuxième volume secondaire **132.** Ledit au moins un deuxième organe d'obstruction **142** est configuré pour limiter, de préférence pour obstruer, tout ou en partie le déplacement dudit au moins un deuxième élément d'étanchéité **141** dudit premier volume secondaire **133** vers ledit deuxième volume secondaire **132.**

Par ailleurs, ledit au moins un organe d'insertion **110** comprend une surface d'appui **113** configurée pour amener ledit au moins un deuxième élément d'étanchéité **141** au contact dudit au moins un deuxième organe d'obstruction **142** lorsque ledit au moins un organe d'entraînement **130** est maintenu dans ladite au moins une première position **101** de sorte que ledit au moins un deuxième élément d'étanchéité **141** puisse être amené au contact dudit au moins un deuxième organe d'obstruction **142** lorsque ledit au moins un organe d'entraînement **130** est maintenu dans ladite au moins une première position **101.**

Toujours visible sur les figs. 1A et 1B, ledit dispositif d'étanchéité **100** comprend un organe de rappel **160** configuré pour étanchéifier ledit espace secondaire **131** entre ledit au moins un organe d'entraînement **130** et ledit au moins un organe d'insertion **110** et/ou pour compenser un jeu dudit au moins un organe de maintien **150** de sorte à compenser ledit jeu induit par les tolérances de construction dudit au moins un organe de maintien **150,** lorsque ledit au moins un organe d'entraînement **130** est maintenu dans ladite première position **101,** et ainsi étanchéifier ledit espace secondaire **131** entre ledit au moins un organe d'entraînement **130** et ledit au moins un organe d'insertion **110.**

Ledit au moins un premier ensemble d'éléments d'étanchéité **120,** configuré pour étanchéifier ledit espace primaire **201,** se trouve, de préférence sur ledit au moins un organe d'insertion **110,** entre ladite carrure **210** et ledit au moins un organe d'insertion **110,** et comprend au moins un premier élément d'étanchéité **121,** de préférence un premier joint d'étanchéité **121,** et/ou au moins un premier organe d'obstruction **122 :** ledit au moins un premier organe d'obstruction **122** étant plus dur que ledit au moins un premier élément d'étanchéité **121.**

Comme cela peut être remarqué sur les figures, ledit au moins un premier élément d'étanchéité **121** et ledit au moins un deuxième élément sont plus proches l'un de l'autre que ledit au moins un premier organe d'obstruction **122** et ledit au moins un deuxième organe d'obstruction **142** de sorte que ledit au moins un premier et deuxième élément d'étanchéité **141** soient les premiers sur le chemin d'infiltration de l'eau.

Ledit au moins un premier organe d'obstruction **122,** quant à lui, est configuré pour limiter tout ou en partie le déplacement dudit au moins un premier élément d'étanchéité **121** dans ledit espace primaire **201,** de préférence pour obstruer ledit déplacement dudit au moins un premier élément d'étanchéité **121** dans ledit espace primaire **201.** En effet, ledit espace primaire **201** comprend un premier volume primaire **203** comprenant ledit au moins un premier organe d'obstruction **122** et ledit au moins un premier élément d'étanchéité **121,** et un deuxième volume primaire **202.** Ledit au moins un premier organe d'obstruction **122** est configuré pour limiter, de préférence pour obstruer, tout ou en partie le déplacement dudit au moins un premier élément d'étanchéité **121** dudit premier volume primaire **203** vers ledit deuxième volume primaire **202** de sorte à rendre ledit espace primaire **201** étanche pour de fortes pressions comme, par exemple, inférieures à 1500 bars.

À cela s'ajoute, selon les modes de réalisations, un organe de support **112,** compris par ledit au moins un organe d'insertion **110,** pour supporter ledit au moins un premier ensemble d'éléments d'étanchéité **120,** afin d'augmenter la limitation du déplacement dudit au moins un premier ensemble d'éléments d'étanchéité **120** lors de fortes pressions comme, par exemple, inférieures à 1500 bars. En effet, ledit au moins un premier ensemble d'éléments d'étanchéité **120** est compris entre ledit organe de support **112** et ledit organe de butée **114.**

Bien entendu, le dispositif d'étanchéité **100** permet d'étanchéifier la montre **200,** plus particulièrement ledit espace primaire **201** entre ladite carrure **210** et ledit au moins un organe d'insertion **110,** et ledit espace secondaire **131** entre ledit au moins un organe d'entraînement **130** et ledit au moins un organe d'insertion **110,** pour de fortes pressions comme, par exemple, inférieures à 1500 bars.

## Revendications

1. Dispositif d'étanchéité (100) pour montre (200), de préférence de montre (200) ; ledit dispositif d'étanchéité (100) étant configuré pour être inséré dans un espace primaire (201) compris dans une carrure (210) ; ledit dispositif d'étanchéité (100) comprenant au moins un :
- Organe d'insertion (110) ; ledit au moins un organe d'insertion (110) étant configuré pour être inséré dans ledit espace primaire (201) ;
- Premier ensemble d'éléments d'étanchéité (120) ; ledit au moins un premier ensemble d'éléments d'étanchéité (120) configuré pour étanchéifier ledit espace primaire (201) entre ladite carrure (210) et ledit au moins un organe d'insertion (110) ;
- Organe d'entraînement (130) ; ledit au moins un organe d'entraînement (130) comprenant un espace secondaire (131) configuré pour recevoir ledit au moins un organe d'insertion (110) ; et,
- Deuxième ensemble d'éléments d'étanchéité (140) ; ledit au moins un deuxième ensemble d'éléments d'étanchéité (140) étant configuré pour étanchéifier ledit espace secondaire (131) entre ledit au moins un organe d'entraînement (130) et ledit au moins un organe d'insertion (110).

2. Dispositif d'étanchéité (100) selon la revendication 1, dans lequel ledit au moins un premier ensemble d'éléments d'étanchéité (120) comprend au moins un premier élément d'étanchéité (121) et/ou au moins un premier organe d'obstruction (122).

3. Dispositif d'étanchéité (100) selon la revendication 1 ou 2, dans lequel ledit au moins un organe d'entraînement (130) comprend une cavité (134) configuré pour loger ledit au moins un deuxième ensemble d'éléments d'étanchéité (140).

4. Dispositif d'étanchéité (100) selon l'une quelconque des revendications précédentes, dans lequel ledit au moins un deuxième ensemble d'éléments d'étanchéité (140) comprend au moins un deuxième élément d'étanchéité (141) et/ou au moins un deuxième organe d'obstruction (142).

5. Dispositif d'étanchéité (100) selon la revendication 4, dans lequel ledit au moins un premier élément d'étanchéité (121) et ledit au moins un deuxième élément sont plus proches l'un de l'autre que ledit au moins un premier organe d'obstruction (122) et ledit au moins un deuxième organe d'obstruction (142).

6. Dispositif d'étanchéité (100) selon l'une quelconque des revendications précédentes, dans lequel ledit au moins un organe d'entraînement (130) étant configuré pour être maintenu dans au moins une première position (101), pour entraîner dans ladite au moins une deuxième position (102) et pour se déplacer ou être déplacé entre au moins une première position (101) et au moins une deuxième position (102).

7. Dispositif d'étanchéité (100) selon la revendication 6, lequel comprend au moins un organe de maintien (150) configuré pour maintenir ledit au moins un organe d'entraînement (130) dans ladite au moins une première position (101).

8. Dispositif d'étanchéité (100) selon la revendication 7, dans lequel ledit au moins un organe de maintien (150) comprend au moins un élément de maintien (151) disposé sur ledit au moins un organe d'insertion (110) et au moins une partie de maintien (153) disposée sur ledit au moins un organe d'entraînement (130) ; ledit au moins un élément de maintien (151) étant configuré pour coopérer de manière amovible avec ladite au moins une partie de maintien (153).

9. Dispositif d'étanchéité (100) selon l'une quelconque des revendications 6 à 8, dans lequel ledit au moins un organe d'insertion (110) comprend une surface d'appui (113) configurée pour amener ledit au moins un deuxième élément d'étanchéité (141) au contact dudit au moins un deuxième organe d'obstruction (142) lorsque ledit au moins un organe d'entraînement (130) est maintenu dans ladite au moins une première position (101).

10. Dispositif d'étanchéité (100) selon l'une quelconque des revendications précédentes, lequel comprend un organe de rappel (160) configuré pour étanchéifier ledit espace secondaire (131) entre ledit au moins un organe d'entraînement (130) et ledit au moins un organe d'insertion (110) et/ou pour compenser un jeu dudit au moins un organe de maintien (150).

11. Dispositif d'étanchéité (100) selon l'une quelconque des revendications précédentes, dans lequel ledit au moins un organe d'insertion (110) comprend un organe de butée (114) configuré pour être en butée contre la carrure (210) et/ou contre ledit au moins un organe d'entraînement (130).

12. Dispositif d'étanchéité (100) selon l'une quelconque des revendications précédentes, dans lequel ledit au moins un organe d'insertion (110) comprend un organe de support (112) configuré pour supporter ledit au moins un premier ensemble d'éléments d'étanchéité (120).

13. Dispositif d'étanchéité (100) selon la revendication 12, dans lequel ledit au moins un premier ensemble d'éléments d'étanchéité (120) est compris entre ledit organe de support (112) et ledit organe de butée (114).

14. Montre (200) configurée pour être étanche comprenant un dispositif d'étanchéité (100) selon l'une quelconque des revendications précédentes 1 à 13.
